(19) Europäisches Patentamt
European Patent Office
Office européen des brevets

(11) **EP 2 835 252 A1**

(12) **EUROPEAN PATENT APPLICATION**

(43) Date of publication:
**11.02.2015 Bulletin 2015/07**

(51) Int Cl.:
**B29C 70/42** (2006.01)        **B29D 99/00** (2010.01)
**B29C 43/32** (2006.01)        **B29C 33/40** (2006.01)

(21) Application number: **13382325.2**

(22) Date of filing: **09.08.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Airbus Operations S.L.**
**28906 Madrid (ES)**
• **EADS Construcciones Aeronauticas, S.A.U.**
**28022 Madrid (ES)**

(72) Inventors:
• **Tabarés Fernández, Patricia**
**28906 Madrid (ES)**

• **Domínguez Escauriaza, Felix**
**28906 Madrid (ES)**
• **Chamorro Alonso, Francisco Javier**
**28906 Madrid (ES)**
• **Sánchez Pérez, Melania**
**28906 Madrid (ES)**
• **Muñoz López, Maria del Pilar**
**28906 Madrid (ES)**

(74) Representative: **Carpintero Lopez, Francisco et al**
**Herrero & Asociados, S.L.**
**C/Alcalá 35**
**28014 Madrid (ES)**

(54) **Tooling and method for consolidating highly integrated composite structures**

(57)    A tooling and a method for manufacturing highly integrated composite material structures, particularly applicable to aircraft structures. The tooling comprises at least two consolidating modules (5, 6, 7) mounted at a male tool assembly (8), and at least two thermal expansion blocks (3, 3', 4) arranged to push the consolidating modules (5, 6, 7) due to their thermal expansion. A first thermal expansion block (3, 3', 4) is arranged in the male tool assembly (8), to push at least one consolidating modules (5, 6, 7) in a first direction, and a second thermal expansion block (3, 3', 4) is arranged, to push at least one consolidating modules (5, 6, 7) in a second direction. It allows the integration of complex structures due to the expansion blocks (3, 3', 4) used as pushers in different directions, through which the frames are consolidated without the autoclave pressure, so that highly integrated composite fuselage structure where all the structural elements, such as stringers, frames and skin are all co-cured in one shot.

FIG.3

**Description**

**Object of the invention**

The present invention refers in general to the manufacture of carbon fiber pieces or structures, preferably in the aeronautical industry.

More in particular, the invention relates to a tooling and a method for manufacturing highly integrated composite material structures, particularly applicable to aircraft structures.

An object of the invention is to reduce manufacturing costs in the production of highly integrated composite fuselage structures, where all the structural elements, such as stringers, frames and skin can all be co-cured in only one curing cycle.

In addition to the cost reduction, it is also an object of the present invention to simplify the manufacturing process, avoiding the use of fasteners to join or reinforce the bonding of the components that form a complex structure.

**Background of the invention**

The use of composite materials in the manufacture of aircraft structures has increased significantly due to their reduced weight and high strength. Since weight is an essential aspect in the aeronautical industry, optimized structures obtained from composite materials prevail over metallic ones.

However, some drawbacks appear in the use of composite materials which cause an increase of the manufacturing costs. One of the most significant drawbacks, is that it difficult to manufacture composite structures compared with the production of metal parts. The increase of the manufacturing cost, is specially significant in the production of large composite structures made of several components and having intricate shapes, such as torsion boxes or reinforced skin panels. The human labor required to manufacture such structures is very high, and the tooling needed for their fabrication is complex and expensive.

In the manufacture of composite structures a plurality of sheets or plies of a resin coated fibers, for example Carbon Fiber Reinforced Plastic (CFRP), are layered up on a male tool or mandrel having a desired shape. Then, the stack of plies are placed inside a vacuum bag, and cured inside an autoclave where they are subjected to heat and pressure.

Due to the complexity of some structures, some components are fabricated separately and then bonded together, for example stringers, frames, ribs, or skin panels may be fabricated separately, for example they are only pre-cured, and at a subsequent stage, they are joined together, for example by co-curing, bonding or secondary bonding several components. Therefore, several curing cycles are needed to obtain a final piece, thus, the whole process is time-consuming and require several tools to conform each separate component.

The above-described manufacturing process, is based on autoclave consolidation, where the stack of uncured plies are exposed to the autoclave pressure while they are being cured, in order to compact the stack of plies and eliminate resin porosity. In that process, it is only possible to consolidate the stack of plies in the direction where pressure is applied with the vacuum bag. For this reason, reinforcement elements such as frames or ribs, are normally fasten or even bonded to the surrounding elements in later stages of the manufacturing process.

Currently, the most integrated composite structure that can be obtained in only one shot (one curing cycle) with existing techniques, is formed only by two components, for example an stringer and a skin panel co-cured.

Therefore, it has been detected the need in the aeronautical industry, for a new process and tooling which is capable of fabricating highly integrated composite fuselage structures, wherein all of their components or at least most of them, are co-cured in one shot, integrating stringers, frames, skin panels, etc, without using fasteners.

**Summary of the invention**

The present invention is defined in the appended independent claims, and satisfactorily solves the above-described drawbacks of the prior art. Preferred embodiments of the invention and combinations thereof, are described in the appended dependent claims.

The invention refers to a manufacturing technique for consolidating composite parts with complex shapes, using a tooling provided with thermal expansion blocks used as pushers to exert pressure on the composite laminate. In those areas where the autoclave pressure is not effective to consolidate the composite laminate, pressure is then provided by the expansion or dilatation of the expansion blocks produced by the effect of the increasing temperature inside the autoclave. The composite structure is thereby consolidated by the action of the autoclave pressure and/or the thermal expansion of said blocks.

The invention allows the frames integration due to the expansion blocks used as pushers in different directions, through which the frames are consolidated without the autoclave pressure, thus, highly integrated composite structures, namely structures formed by several components such as frames and/or a stringers of any shape, bonded to a skin panel, can satisfactorily be cured in only one curing cycle.

Therefore, an aspect of the invention refers to a tooling for consolidating highly integrated composite structures, wherein the tooling includes at least one tooling module, said tooling module comprising a male tool assembly and at least two consolidating modules mounted at the male tool assembly. Said consolidating modules are displaceable with respect to the male tool assembly for pressing against a structure of composite laminate to be consolidated, for that, the consolidating modules have a conformed surface meant to be in contact with the composite laminate.

Additionally, the tooling of the invention includes two or more thermal expansion blocks suitably arranged to push and therefore displace the consolidating modules, due to their thermal expansion, against the composite laminate. A first thermal expansion block is arranged in the male tool assembly to push one or more consolidating modules in a first direction, and a second thermal expansion block is arranged in the male tool assembly, to push two or more consolidating modules in a second direction, different from the first direction.

Preferably, the material of the expansion blocks has to meet certain requirements:

- the expansion blocks material needs to have a high thermal coefficient of expansion, since its expansion shall provide the pressure that the composite element requires to be suitably consolidated. Composite part thickness determines the level of consolidation and therefore the expansion required. Preferably, the thermal coefficient of expansion (CTE) is above 100E-6 $\underline{o}C^{-1}$, although another material with lower CTE could be used, as long as the dimensions of the expansion blocks and tooling are then made larger, and

- the expansion blocks material need to have a compression modulus high enough to not deform under a pressure similar to the autoclave cycle pressure. Preferably, the expansion blocks material has a compressive yield strength value above 1 MPa.

The expansion blocks having the above-mentioned properties, can be used repeatedly in many manufacturing cycles for manufacturing multiple units of the same type.

With this manufacturing concept is possible to consolidate complex geometries and different thicknesses, calculating for each case the required displacement for the consolidating modules to consolidate the composite structure. This displacement is the dimension that the expansion blocks have to expand.

By means of the thermal expansion, the different expansion blocks pushes the consolidating modules and transfers through them, the pressure necessary to compact and consolidate the laminate in different directions without the autoclave pressure.

Another aspect of the invention refers to a method for consolidating highly integrated composite structures, wherein a structure of uncured composite laminate is cured within an autoclave by applying heat and pressure to that structure. For consolidating the structure, pressure is applied to it by means of two or more consolidating modules in at least two different directions, either opposite, orthogonal to each other or defining an angle different than 0 in between.

A first consolidating module is pressed against a part of said structure by means of a first thermal expansion block being heated within the autoclave, and a second consolidating module is pressed against another part of said structure by means of a second thermal expansion block also heated within the autoclave.

The tooling and method of the invention allows maximum integration of complex structures without fasteners through this new consolidation technique, which will reduce costs by simplifying the assembly process and the number of autoclave cycles.

**Brief description of the drawings**

Preferred embodiments of the invention, are henceforth described with reference to the accompanying drawings, in which:

Figure 1.- shows an elevational cross-sectional view of an example of one module of a tooling according to the invention in an operating position. Parameters to calculate the pushers dimensions are identified in this figure.

Figure 2.- is the same representation than figure 1, wherein an example of a structure formed by a skin and a J-section frame or stiffener are being cured and consolidated simultaneously.

Figure 3.- is the same representation than figure 2, where arrows are used to indicate pressure directions provided both by the autoclave pressure (by means of a vacuum bag), and by the expansion block. Shorter arrows correspond to the autoclave pressure, and longer arrows correspond to the expansion blocks pressure.

Figure 4.- shows in drawing B the tooling of the previous figures when the consolidation modules are decoupled from the male tool, for example previously to a curing cycle, or after de-molding a cured structure as the one shown in drawing A.

Figure 5.- shows a perspective view of the tooling of previous figures. The expansion blocks are not visible in this figure, since they do not extend to the ends of the tool assembly, but they are housed within the male tool.

Figure 6.- shows a perspective view of an example of a highly integrated composite structure that can be obtained in one shot by the tooling and process of the invention.

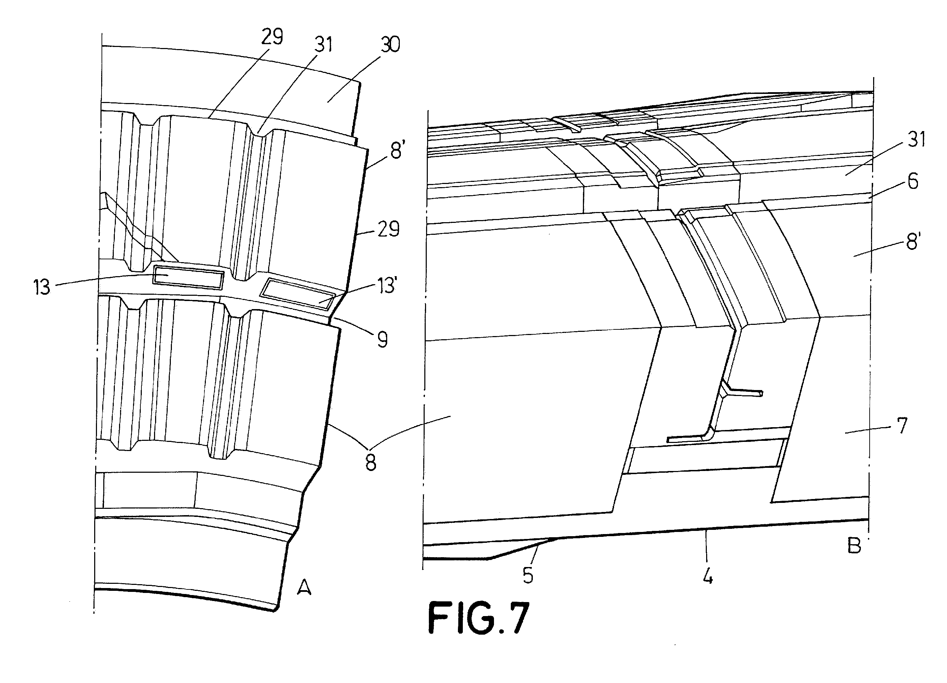

Figure 7.- shows two perspective views from different angles, of a part of a tooling for consolidating a structure as the one shown in figure 6. In drawing A the consolidating modules are not shown in order to made the visible the location of the expansion blocks.

Figure 8.- shows an elevational view of an schematic representation of a module of the tooling of figure 7 A.

**Preferred embodiment of the invention**

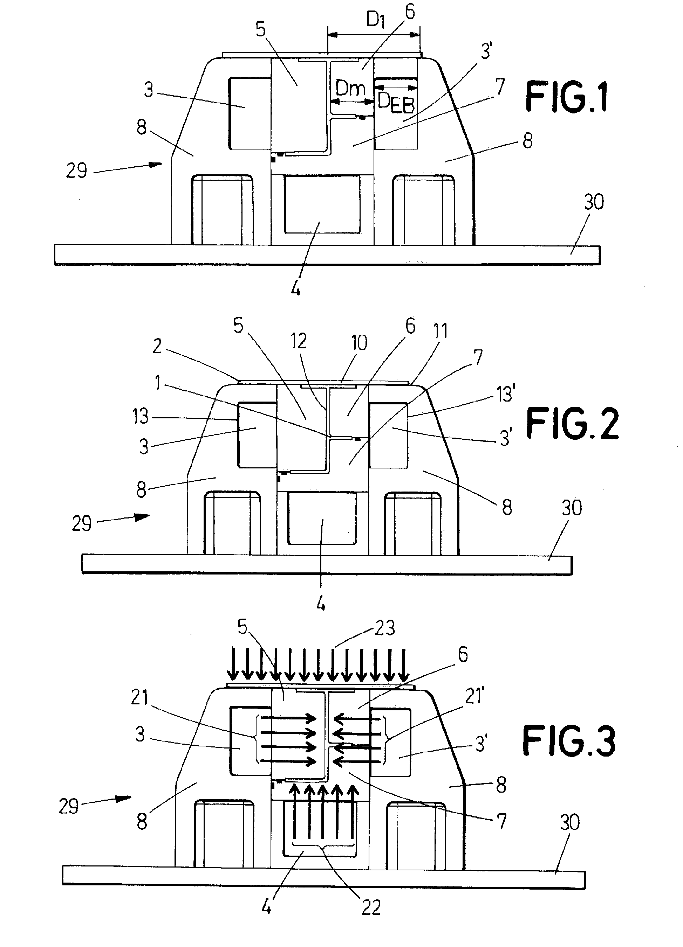

Figures 1 to 4 shows an example of a tooling module (29) for consolidating composite structures, said tooling module comprising a male tool assembly (8), preferably metallic, and a set of consolidating modules (5,6,7) also made of metal, mounted at the male tool assembly in such a manner that the consolidating modules (5,6,7), are displaceable with respect to the male tool assembly (8) for consolidating a structure of composite laminate (10). For that purpose, the male tool assembly (8) define a chamber (9) within which, the set of consolidating modules (5,6,7) assembled together, are fitted. The male tool assembly (8) may consist of a single body, or it may consist of two separable side parts coupled to each other.

The external shape of the block formed by the three consolidating modules (5,6,7) coupled together as shown in figures 1 to 3, is similar to the shape of that chamber (9), in this case, rectangular.

Each of the consolidating modules (5,6,7) has a surface (15,16,17) conformed with the shape of a part of a structure of composite laminate (10) to be consolidated, so when the consolidating modules (5,6,7) are coupled together, as shown in the figures, a cavity (12) is formed between them for receiving a part of a composite structure to be cured and consolidated, thus, said cavity (12) has a similar shape than the cross-sectional shape of a part of the composite structure (10) to be obtained.

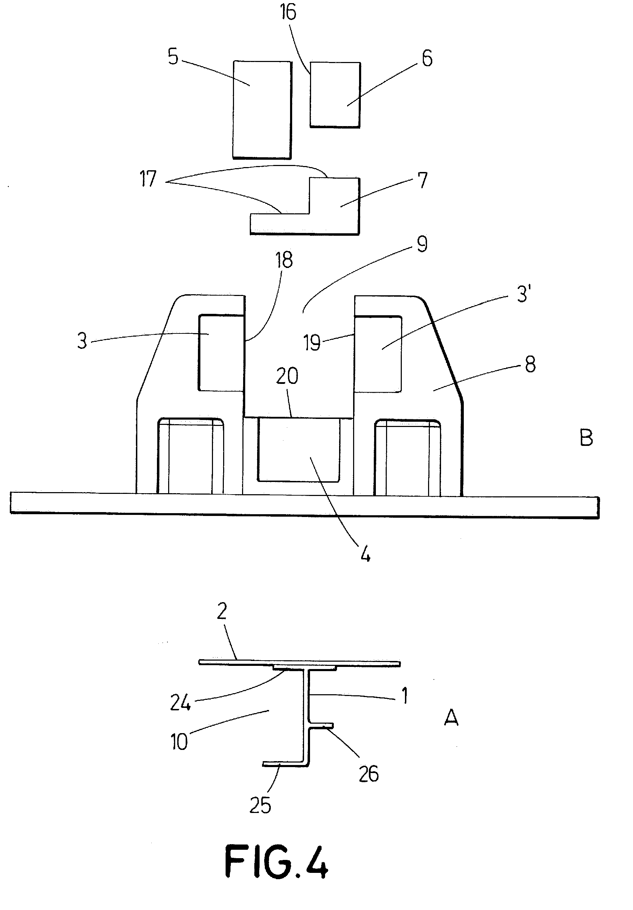

In this exemplary embodiment of the invention, three thermal expansion blocks (3,3',4) are arranged inside the male tool assembly (8) to push the consolidating modules (5,6,7) due to their thermal expansion, when the thermal expansion blocks are heated within an autoclave. Each expansion block (3,3',4) is received within a housing (13,13',14) provided at the male tool assembly (8), each housing having an open base (18,19,20) so that the thermal expansion block housed therein is expandable through said open base in a predetermined direction towards the structure (10). Said open bases of those housings (13,13',14) are flush with the contour of the chamber (9), as shown more clearly in figure 4. Upon their expansion, the thermal expansion blocks (3,3',4) are supported or rest on the male tool assembly (8), particularly on a surface of the male tool assembly (8) opposite the open base of the respective housing.

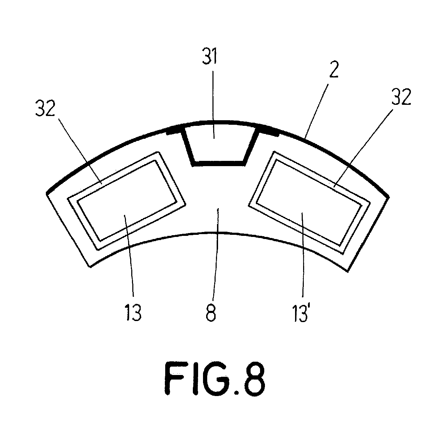

The lateral dimensions of the housing (13,13',14) are slightly larger than the dimensions of the respective expansion block (3,3',4), so that a perimetral cavity (32) (shown in figure 8) is defined between both elements, in order to receive the expansion of the expansion block in the directions where the expansion is not used.

As it can be appreciated in the figures, some segments of the cavity (12) formed between the consolidating modules (5,6,7) are isolated from an external pressure, so that some parts of the composite structure (10) would not be affected by the autoclave pressure. Therefore, some parts of the composite structure (10) would only be consolidated, or at least mainly, by the pressure exerted by the expansions blocks (3,3',4).

In this particular embodiment, there are two lateral expansion blocks (3,3') which have the same dimension and shape, and are symmetrically arranged in the male tool assembly (8) facing each other. A bottom expansion block (4) is placed within the male tool assembly (8) below the lateral blocks (3,3'), and it is centered with respect to those blocks (3,3') as shown in the figures. The three expansion blocks (3,3',4) have a rectangular cross-section.

The way to consolidate highly integrated or complex composite structures, is to use several expansion blocks used as pushers to compact the composite structure (10) in different directions inside the tooling, where the autoclave pressure does not reach the laminate or it is not effective. In this sense, the thermal expansion blocks (3,3',4) are arranged in the male tool assembly (8), to push two or more consolidating modules, in one or two or more different directions, which can be for example opposite and/or orthogonal to each other, or define any other angle in between different than 0.

In the embodiment shown in the figures, the consolidating modules (5,6,7) are configured to consolidate a J-shaped frame (1) which is being co-cured with a skin panel (2). The frame (1) is fitted within the cavity (12) and it is surrounded by the three consolidating modules (5,6,7), which are pushed simultaneously and equally by the two lateral expansion blocks (3,3') in opposite directions (21,21') towards the frame (1), due to their thermal expansion. The first consolidating module (5) is pressed laterally by the first expansion block (3), and the second and third consolidating modules (6,7) are both pressed laterally by the second expansion block (3'). In turn, the third consolidating module (7) is also pressed upwardly by the third expansion block (4) towards the frame (1) in a direction (22) orthogonal to the pressure direction exerted by the lateral expansion blocks (3,3').

Taking into account several parameters, it is possible to calculate the expansion blocks dimensions (see figure 1) for each particular application. As example of calculations to obtain the expansion blocks dimension to consolidate a web frame are shown below.

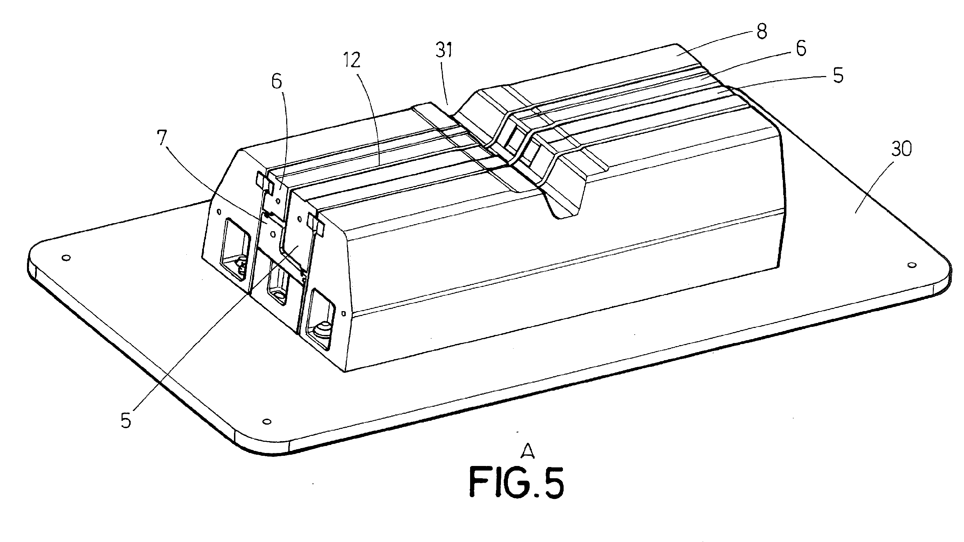

The tooling module (29) shown in the figures is an elongated body, and it is provided at its upper base with a transversal groove (31) which is conformed to receive a part of a load frame (28) of the structure of figure 5. That load frame (28) has a trapezoidal shape, and it is consolidated by pressure bags by means of the autoclave pressure in a known manner.

Condition to be fulfilled is:

$$D_T = D_{EB} + gap + D_m + t_{uncured\ laminate}$$

where:

$D_T$ = male tool dimension.
$D_{EB}$ = expansion blocks dimension.
Gap = gap between male tool and tooling modules.
$D_m$ = tooling modules dimension.
$t_{uncured\ laminate}$ = uncured part to consolidate thickness.
$\alpha_{tool}$ = tool material thermal coefficient of expansion.
$\alpha_{EB}$ = expansion blocks material thermal coefficient of expansion.
AT = temperature increment between cured temperature and ambient temperature.
$t\ cured_{laminate}$ = cured part thickness.
P = consolidated desired pressure.
$E_{EB}$ = Young's Modulus for compression.

Introducing data on the next equation, the expansion blocks required dimension is calculated:

$$D_{EB} = \frac{(D_T - D_m) \times (1 + \alpha_{tool} \times \Delta T) - t_{cured\ laminate}}{(1 + \alpha_{EB} \times \Delta T - P / E_{EB})}$$

In the manufacturing process, the frame (1) is laminated on modules (5, 6, 7) which are then coupled together forming a rectangular block, which is fitted within the chamber (9) of the male tool assembly (8). Once the frame (1) is inserted into the male tool, the skin (2) is placed onto the tool, and for that, the male tool assembly (8) and the two upper consolidating modules (5,6) form at the top of the tooling a substantially flat surface (11) for supporting said skin (2). The tooling is then placed inside a vacuum bag within an autoclave.

The consolidation scheme for the different parts of the structure is:

- the frame web (1) is consolidated by the thermal expansion of the two lateral expansion blocks (3,3') in opposite directions (21,21').
- the frame's feet (24), the skin (2), the reinforcement (26) and the upper flange (25) are consolidated by the combined action of autoclave pressure and the dilatation of the expansion block (4) (pressure directions (23) and (22)).

The part consolidates by this method could be a stiffener, a frame or any other reinforcement element with any other section.

Preferably, the material of the expansion blocks used as pushers is Teflon, fiber glass reinforced Teflon, Nylon or any other material or mixture of materials, suitable for that purpose, and having both a high thermal coefficient of expansion and a high compression modulus. The expansion block material is not an elastomer, since this material is not suitable for the required use, in that its compression module is not high enough. A block made of an elastomer subjected to the temperatures and pressures within an autoclave, typically around 180°C, and 100 - 130 psi (0.7 - 0.9 MPa) respectively, may be deformed permanently and it would not be able to return to its original shape.

The invention also refers to a method for consolidating highly integrated composite structures, which is derived from the use of the above described tooling.

It will be necessary for each application to calculate the expansion blocks dimension depending on the process parameters to obtain the required consolidation according to the thickness of the part.

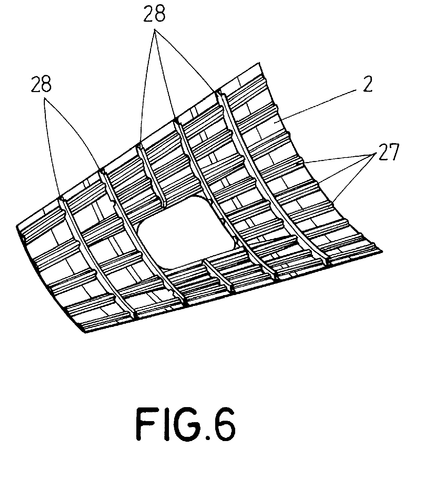

With this process is possible to obtain a high integrated fuselage panel with stringers, frames and skin all co-cured in one shot as the example shown in figure 6.

For curing and consolidating a highly integrated structure of an aircraft as the one shown in figure 6, which is formed by a curved skin panel (2) reinforced by a plurality of stringers (27) and load frames (28), the whole tooling if formed by a plurality of modules (29) similar to the one shown in figures 1, 3 and 5, wherein each of those modules (29) is designed with a geometry corresponding to the specific part of the structure (10) where the module is to be applied.

The plurality of modules (29) are supported by a bed (30) where they are fixed at their respective position.

**Claims**

1. Tooling for consolidating highly integrated composite structures, comprising:

   a male tool assembly,
   at least two consolidating modules mounted at the male tool assembly,
   wherein the consolidating modules are displaceable with respect to the male tool assembly, for consolidating a part of structure of composite laminate within the male tool assembly,
   wherein each of the consolidating modules has a surface having the shape of a part of the structure of composite laminate to be consolidated,
   at least two thermal expansion blocks arranged to push the consolidating modules against the structure of composite laminate due to their thermal expansion,
   wherein a first thermal expansion block is arranged in the male tool assembly, to push at least one consolidating module in a first direction, and
   wherein a second thermal expansion block is arranged in the male tool assembly, to push at least one consolidating module in a second direction different from the first direction.

2. Tooling according to claim 1 wherein the consolidating modules are configured to form a cavity between them when they are coupled together in the male tool assembly, said cavity having a similar shape that the cross-sectional shape of a part of the composite structure to be obtained, and wherein said cavity is at least partially isolated from a pressure exerted externally to the male tool assembly.

3. Tooling according to any of the preceding claims, wherein at least two consolidating modules are facing each other, and two expansion blocks are arranged to push respectively said consolidating modules against one another in opposite directions.

4. Tooling according to any of the preceding claims, wherein at least two consolidating modules and one expansion blocks, are arranged so that said expansion block, when heated, would push simultaneously said two consolidating modules.

5. Tooling according to any of the preceding claims, wherein at least one consolidating module and two expansion blocks, are arranged so that said expansion block, when heated, would push said consolidating module in orthogonal directions.

6. Tooling according to any of the preceding claims, wherein each thermal expansion block is received within a housing provided at the male tool assembly, said housing having an open base so that the thermal expansion block housed therein is expandable through said open base.

7. Tooling according to any of the preceding claims, wherein the first and second directions define an angle in between different than 0.

8. Tooling according to claim 7, wherein the first and second directions are opposite and/or orthogonal to each other.

9. Tooling according to any of the preceding claims wherein the thermal expansion blocks have a thermal expansion coefficient above 100E-6 °C$^{-1}$.

10. Tooling according to any of the preceding claims wherein each of the thermal expansion blocks has a compressive yield strength above 1 MPa.

11. Tooling according to any of the preceding claims wherein the thermal expansion blocks are made of: Teflon, fiber glass reinforced Teflon, or Nylon.

12. Tooling according to any of the preceding claims wherein the thermal expansion blocks are dimensioned to exert pressure to satisfactorily consolidate a structure of composite laminate.

13. Tooling according to any of the preceding claims wherein the male tool assembly and the consolidating modules are metallic.

14. Method for consolidating highly integrated composite structures, comprising the steps of:

curing a structure of a composite laminate within an autoclave by applying heat and pressure to that structure, **characterized in that** the step of applying pressure comprises:

pressing the structure by means of two or more consolidating modules in at least two different directions, wherein a first consolidating module is pressed against a part of said structure by means of a first thermal expansion block being heated within the autoclave, wherein a second consolidating module is pressed against another part of said structure by means of a second thermal expansion block being heated within the autoclave.

FIG.1

FIG.2

FIG.3

16

5

6

17

7

18

9

3

3'

19

8

20

B

4

2

24

1

10

A

26

25

# FIG.4

FIG.5

FIG.6

FIG.7

FIG.8

Europäisches
Patentamt

European
Patent Office

Office européen
des brevets

# EUROPEAN SEARCH REPORT

Application Number

EP 13 38 2325

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 190 773 A (DAMON CHRISTOPHER J [US]) 2 March 1993 (1993-03-02) * figures 4, 5, 6 * * column 8, lines 38-49 * * column 9, lines 43-61 * * column 3, lines 55-67 * ----- | 1-14 | INV. B29C70/42 B29D99/00 B29C43/32 B29C33/40 |
| X | US 4 388 263 A (PRUNTY JOHN) 14 June 1983 (1983-06-14) * figure 2 * * column 3, lines 39-47 * * column 5, lines 48-49 * ----- | 1-3,5,6, 9-14 | |

TECHNICAL FIELDS
SEARCHED (IPC)

B29C
B29D

The present search report has been drawn up for all claims

| Place of search | Date of completion of the search | Examiner |
|---|---|---|
| The Hague | 9 January 2014 | Gasner, Benoit |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                               
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 13 38 2325

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2014

| Patent document cited in search report | | Publication date | Patent family member(s) | | Publication date |
|---|---|---|---|---|---|
| US 5190773 | A | 02-03-1993 | AU | 660196 B2 | 15-06-1995 |
| | | | AU | 2751292 A | 15-06-1993 |
| | | | CA | 2120505 A1 | 27-05-1993 |
| | | | DE | 69215693 D1 | 16-01-1997 |
| | | | EP | 0620777 A1 | 26-10-1994 |
| | | | IL | 103773 A | 10-01-1997 |
| | | | JP | H07501020 A | 02-02-1995 |
| | | | US | 5190773 A | 02-03-1993 |
| | | | WO | 9309928 A1 | 27-05-1993 |
| US 4388263 | A | 14-06-1983 | NONE | | |

EPO FORM P0459

For more details about this annex : see Official Journal of the European Patent Office, No. 12/82